# EUROPEAN PATENT SPECIFICATION

(11) **EP 1 806 757 B1**
(45) Date of publication and mention of the grant of the patent: **24.09.2014**
(21) Application number: 06013151.3
(22) Date of filing: 26.06.2006
(51) Int. Cl.: H01F 7/02, C09J 7/02, G09F 7/04

(54) **Cut-free magnetic tape structure**
Freischneidbare Magnetbandstruktur
Structure de bande magnétique découpable

(30) Priority: 06.01.2006 CN 200610031113
(43) Date of publication of application: 11.07.2007
(73) Proprietor: Wu, Hung-Chih, Hsin-Chuan Taipei County (TW); Fan Chiang, Chen-Liang, Hsin-Chuan Taipei County (TW)
(72) Inventor: Wu, Hung-Chih, Hsin-Chuan Taipei County (TW); Fan Chiang, Chen-Liang, Hsin-Chuan Taipei County (TW)
(74) Representative: Kador, Utz Ulrich

(56) References cited:
- US-A- 4 898 762
- US-A1- 2006 172 103

## Description

### BACKGROUND OF THE INVENTION

The present invention is related to a cut-free magnetic tape structure.

Soft magnets have been widely used recently. Ferric oxide powder or other magnetizable powder is added into a complex sheet material or block material which is a mixture of rubber and plastic or resin. The material is at least once magnetized. Pulse current passes through a magnetic conductive disc with different magnetized divisions to induce different magnetic poles on the surface of the substrate material. Accordingly, a flexible and soft magnet is formed. Such soft magnets can attract each other or attract an iron-made object (attracted object). The soft magnet serves as the material of decorative magnetic block (sheet), magnetic clip, etc. Recently, thin soft magnetic sheets have been developed to widen the application range of soft magnets.

The conventional soft magnet is cut and divided into custom-made products. Thin sheet magnet is cut by means of a cutting tool. This is inconvenient in use. Moreover, in the case of long-distance cutting operation of the soft magnet, a locating platform is necessary for precise measurement and cutting operation. In a modularized production line of soft magnet, the measurement and cutting operation complicate the production procedure and increase the manufacturing cost. As a result, the production capacity is lowered.

A conventional single-face tape is wound into a roll. When used, one end of the tape is pulled out and cut into a segment. The segment of the tape can be attached to an article as a protective cover. The thin sheet magnet can be combined with such tape to achieve more convenience. Taiwanese Utility Model Patent No. 500126 discloses an improved double-face tape. The main body of the tape is made of soft plastic material such as PVC or EVA. An adhesive layer is painted on bottom face of the tape main body. A high-adhesion double-face adhesive film is integrally combined with top face of the tape main body, whereby both faces of the tape main body are adhesive. A double-face oily releasable paper is attached to the back face of the adhesive film. The tape main body is wound into a roll.

US 2006/172103 discloses the preamble of claim 1.

It is tried by the applicant to combine the thin sheet magnetic substrate with the texture of the conventional tape to form a magnetic tape structure which can be easily torn off. A sprayed or painted coating is sprayed or painted on a first face of the magnetic substrate. An adhesive layer is overlaid on a second face of the magnetic substrate. Therefore, the magnetic tape has both adhesion and magnetic attraction.

### SUMMARY OF THE INVENTION

It is therefore a primary object of the present invention to provide a cut-free magnetic tape structure including an elongated tape-type soft magnetic substrate. A user can easily manually tear off in a straight line with high stability a segment of the magnetic tape with a shear force along one of the embossed textures without using any tool. This is achieved using a structure with the features of claim 1.

The present invention can be best understood through the following description and accompanying drawings wherein:

### BRIEF DESCRIPTION OF THE DRAWINGS

Fig. 1 is a perspective view of the present invention;
Fig. 2 is a sectional view of the present invention, showing the embossed textures arranged at equal intervals;
Fig. 2A shows the cutting and winding operation of a cutting machine of the present invention;
Fig. 2B shows the cutting and winding operation of another cutting machine of the present invention, in which the cutting machine simultaneously embosses the blank substrate;
Fig. 2C is a sectional view of the present invention, showing the embossed textures arranged at unequal predetermined lengths;
Fig. 2D is a sectional view of the present invention, showing the embossed textures arranged at intervals of magnetic poles;
Fig. 3 is a perspective view of the present invention, showing that the magnetic tape is embossed with transverse stripes;
Fig. 3A is an enlarged view according to Fig. 3;
Fig. 4 is a perspective view of the present invention, showing that the magnetic tape is embossed with dotted lines;
Fig. 4A is an enlarged view of circled area A of Fig. 4;
Fig. 5 is a perspective view of another embodiment of the present invention; and
Fig. 5A is a perspective view of still another embodiment of the present invention.

### DETAILED DESCRIPTION OF THE PREFERRED EMBODIMENTS

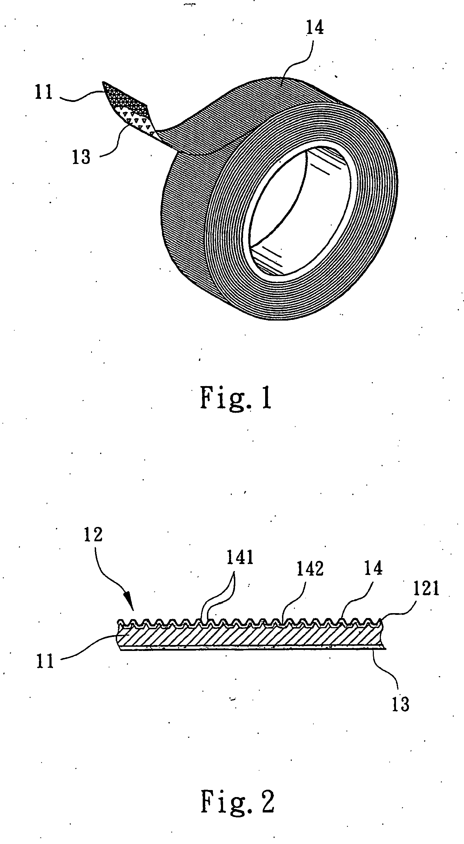

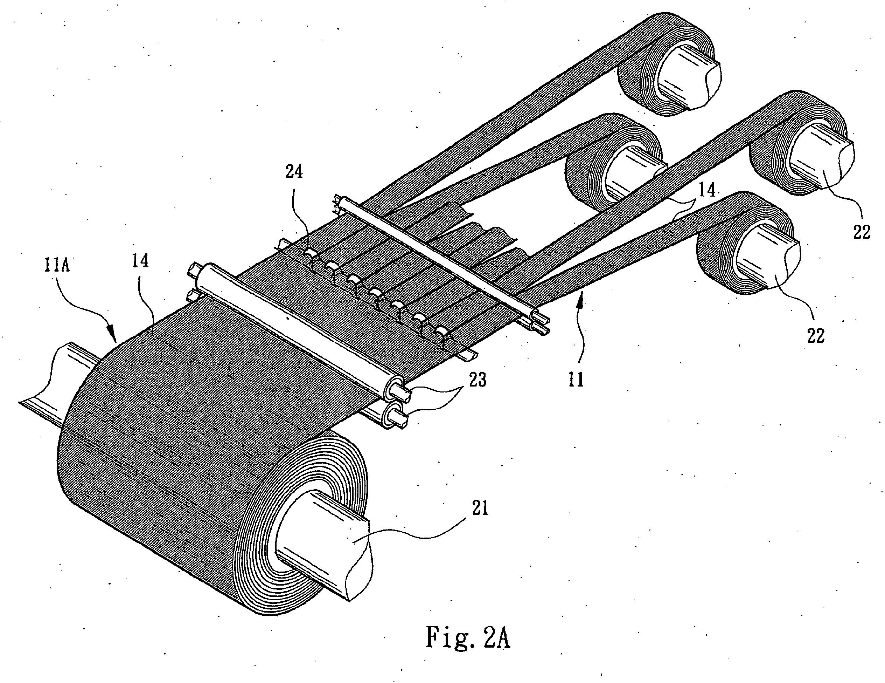

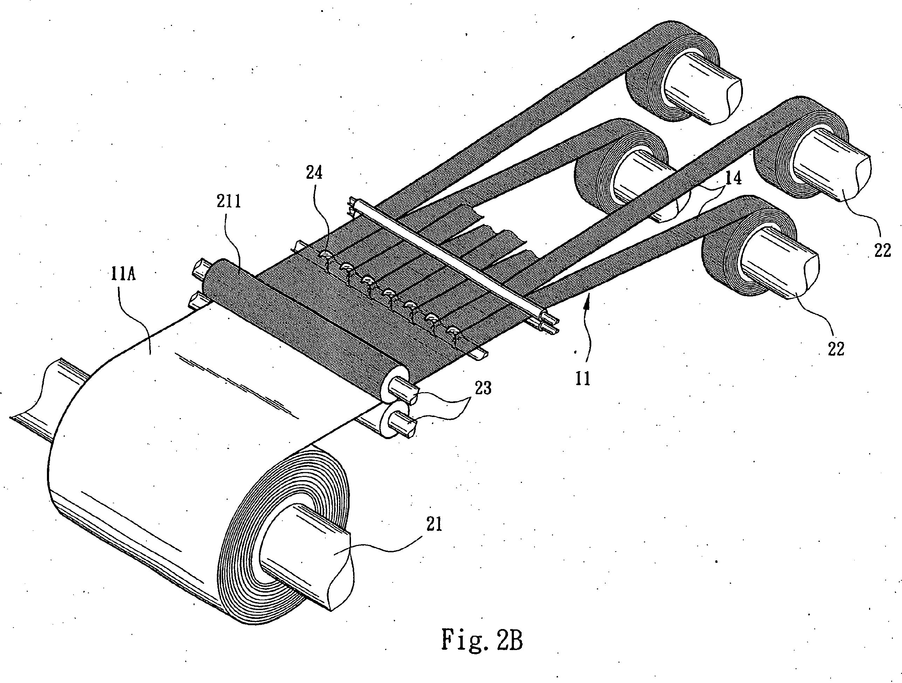

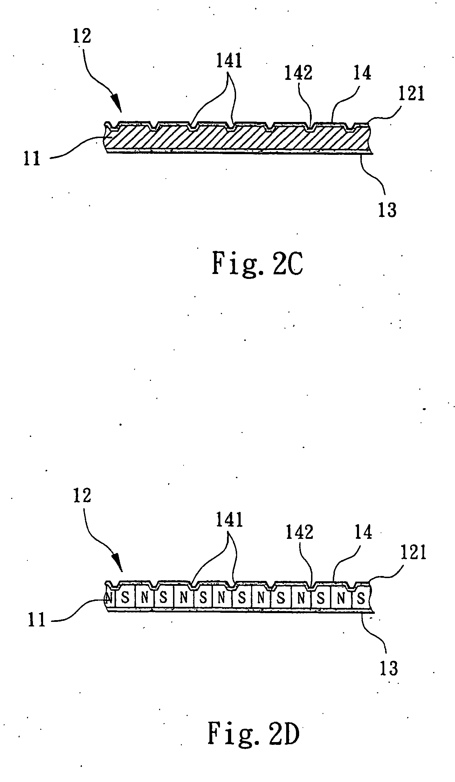

Please refer to Figs. 1 and 2. The cut-free magnetic tape structure of the present invention includes an elongated tape-type soft magnetic substrate 11. The substrate 11 has an outer releasable face 12 and an inner adhesive face having an adhesive layer 13. A sprayed or painted coating 121 of releasable agent or color is sprayed or painted on the releasable face 12. The releasable face 12 is embossed with continuous embossed textures 14 arranged in the same direction. The embossed textures 14 can be arranged at equal intervals (as shown in Fig. 2) or at unequal predetermined lengths between the embossed textures (as shown in Fig. 2C) or at intervals of magnetic poles (as shown in Fig. 2D). In this embodiment, the embossed textures 14 are grooves arranged on the releasable face 12 with a set depth. The substrate 11 can be wound into a roll.

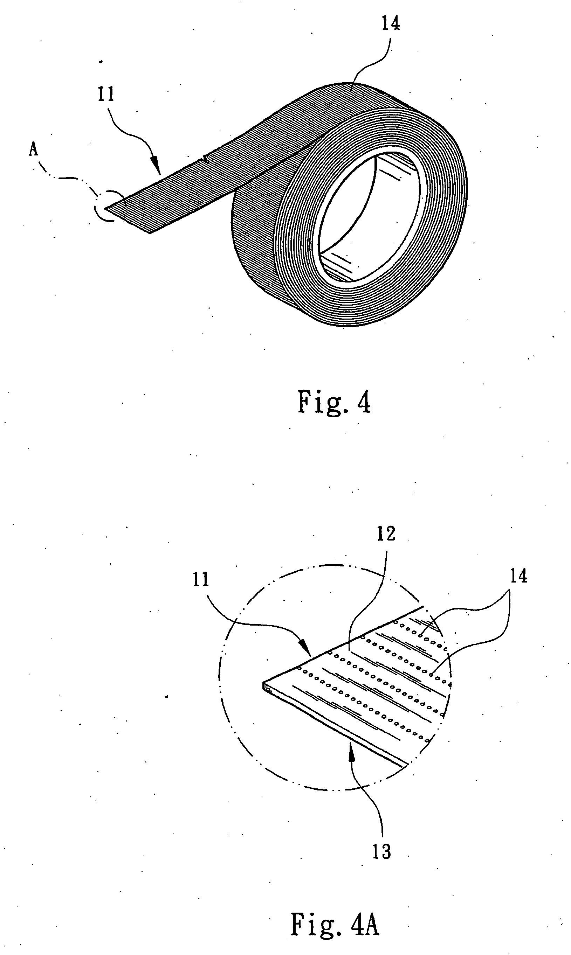

Fig. 2 is an enlarged sectional view of the magnetic substrate 11, showing that the embossed textures 14 are laid on the substrate 11 at equal intervals to form a saw-tooth structure. Each embossed texture 14 has a ridge section 141 and a valley section 142 adjacent to the ridge section 141. The thickness of the substrate 11 is thinned at the valley section 142, whereby the magnetic tape can be torn off by an external shear force along the valley section 142. According to this embodiment, a user can tear off a segment of the magnetic tape without using any cutting tool. Alternatively, the embossed textures 14 can be dotted lines or linearly arranged orifices (as shown in Fig. 4A).

In a preferred embodiment, the tape-type soft magnetic substrate 11 is made from a mixture of plastic, rubber or resin material and magnetizable material. The mixture is formed into a thin sheet or blank substrate 11A (as shown in Fig. 2A). Then, in a production line, the thin sheet or blank substrate 11A is magnetized. In the production procedure, a sprayed coating 121 of releasable agent or paint is sprayed on the upper face of the blank substrate 11A. In addition, a high-adhesion adhesive layer 13 (such as pressure-sensitive adhesive layer) is laid on the lower face of the blank substrate 11A. Then the blank substrate 11A is wound into a roll by means of an automatic cutting machine. In the winding procedure, the adhesive layer 13 faces inner side, while the releasable face 12 faces outer side. The magnetic tape is wound into a roll. The sprayed coating 121 serves to isolate the adhesive layer 13, whereby the inner and outer faces of the substrate 11 can be torn apart.

Fig. 2A shows the cutting and winding operation of an automatic cutting machine. The cutting machine includes a main roller 21, a pair of feeding rollers 23, multiple subsidiary rollers 22 and a cutting unit 24. The substrate 11A embossed wi th embossed textures 14 is unwound from the main roller 21 to pass through the feeding rollers 23. The feeding rollers 23 then feed the substrate 11A to the cutting unit 24 which cuts the substrate 11A into several strips. The strips are respectively wound on the subsidiary rollers 22 into several rolls.

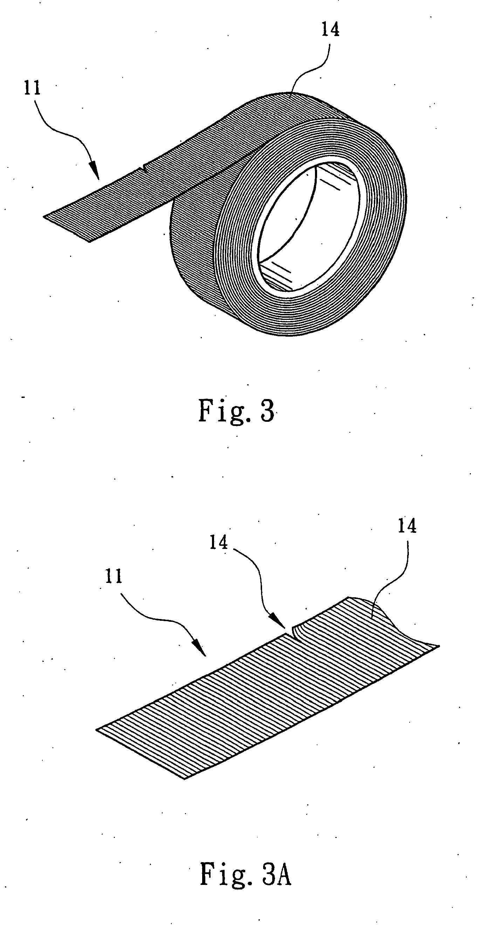

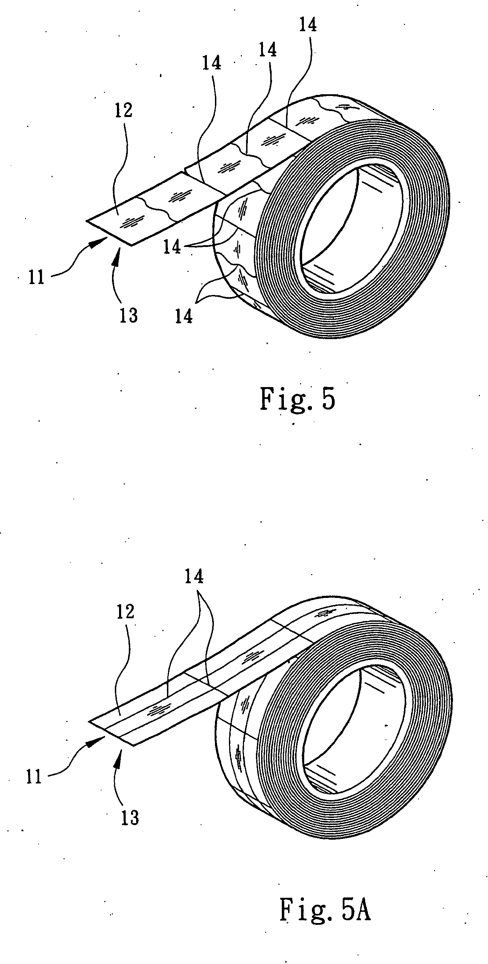

Fig. 2B shows another cutting machine which can simultaneously emboss the magnetic tape. One of the feeding rollers 23 is formed with embossing marks 211 for embossing the releasable face 12 of the substrate 11A. When the substrate 11A passes through the feeding rollers 23, the substrate 11A is embossed with the embossed textures 14 and then cut and wound. The pattern of the embossed textures 14 is determined by the pattern of the embossing marks 211. After embossed, the substrate 11 is formed with transversely lines (Fig. 3A), longitudinal lines (Fig. 5A), dotted lines or lined up orifices (Fig. 4A), waved lines (Fig. 5) or the like.

Referring to Figs. 3 and 4, it should be noted that a user can manually tear off a segment of the embossed magnetic tape along one of the embossed textures 14. In a preferred embodiment, as shown in Fig. 5, the soft magnetic substrate 11 is formed with multiple embossed textures 14 spaced from each other by a predetermined length. The segment of the magnetic tape with a fixed length can be directly torn off for specific use. Alternatively, a user can use an auxiliary tool (such as a ruler or a blade) to tear off the segment of the magnetic tape along any of the embossed textures 14. Therefore, it is no more necessary to first measure the length of the segment and then tear off the segment.

## Claims

1. A cut-free magnetic tape structure comprising an elongated tape-type soft magnetic substrate (11), the substrate having a releasable face (12) and an adhesive face, a sprayed or painted coating (121) being sprayed or painted on the releasable face (12), an adhesive layer (13) being overlaid on the adhesive face, at least one of the two faces of the substrate being embossed with continuously arranged embossed textures (14), the substrate (11) being wound into a roll, further **characterised in that** said embossed textures (14) are laid on the substrate (11) at equal intervals to form a saw tooth structure, and wherein each embossed texture (14) has a ridge section (141) and a valley section (142) adjacent to the ridge section (141).

2. The cut-free magnetic tape structure as claimed in claim 1, wherein the releasable face (12) of the substrate (11) is embossed with embossed textures (14) arranged in the same direction.

3. The cut-free magnetic tape structure as claimed in claim 1, wherein the releasable (12) face of the substrate (11) is embossed with embossed textures (14) arranged in different directions.

4. The cut-free magnetic tape structure as claimed in claim 1, 2 or 3, wherein the embossed textures (14) are grooves with a set depth.

5. The cut-free magnetic tape structure as claimed in claim 1, 2 or 3, wherein the embossed textures (14) are linear grooves.

6. The cut-free magnetic tape structure as claimed in claim 1, 2 or 3, wherein the embossed textures (14) are dotted lines.

7. The cut-free magnetic tape structure as claimed in claim 1, 2 or 3, wherein the embossed textures (14) are linearly arranged orifices.

8. The cut-free magnetic tape structure as claimed in claim 1, 2 or 3, wherein the embossed textures (14) are spaced from each other by predetermined lengths.

9. The cut-free magnetic tape structure as claimed in claim 8, wherein the predetermined lengths between the embossed textures (14) are set according to unit interval of magnetic poles.

10. The cut-free magnetic tape structure as claimed in claim 8, wherein the predetermined lengths between the embossed textures (14) are unequal.

11. The cut-free magnetic tape structure as claimed in claim 1, 2 or 3, wherein the embossed textures (14) have irregular shapes.

12. The cut-free magnetic tape structure as claimed in claim 1, 2 or 3, wherein the sprayed coating or painted coating (121) is doped with a color.

## Patentansprüche

1. Eine schnittfreie Magnetbandstruktur, welche ein langgestrecktes bandtypisches, weiches, magnetisches Substrat (11) umfasst, wobei das Substrat eine freigebbare Fläche (12) und eine Klebefläche, eine gesprühte oder gemalte Ummantelung (121), welche auf die freigebbare Fläche (12) gesprüht oder gemalt wird, eine Klebeschicht (13), welche auf die Klebefläche aufgelegt wird, hat, wobei mindestens eine von den zwei Flächen des Substrats mit durchgängig angeordneten geprägten Strukturen (14) geprägt ist, wobei das Substrat (11) in eine Rolle gewunden wird, weiterhin **dadurch gekennzeichnet, dass** die geprägten Strukturen (14) auf das Substrat (11) in gleichen Intervallen gelegt werden, so dass sie eine Sheddachstruktur bilden, und worin jede geprägte Struktur (14) einen Gratabschnitt (141) und einen Talabschnitt (142) anliegend an den Gratabschnitt (141) hat.

2. Schnittfreie Magnetbandstruktur gemäß Anspruch 1, worin die freigebbare Fläche (12) des Substrats (11) mit geprägten Strukturen (14), die in die gleiche Richtung angeordnet sind, geprägt ist.

3. Schnittfreie Magnetbandstruktur gemäß Anspruch 1, worin die freigebbare (12) Fläche des Substrats (11) mit geprägten Strukturen (14), die in verschiedenen Richtungen angeordnet sind, geprägt ist.

4. Schnittfreie Magnetbandstruktur gemäß Ansprüchen 1, 2 oder 3, worin die geprägten Strukturen (14) Kerben mit einer eingestellten Tiefe sind.

5. Schnittfreie Magnetbandstruktur gemäß Ansprüchen 1, 2 oder 3, worin die geprägten Strukturen (14) lineare Kerben sind.

6. Schnittfreie Magnetbandstruktur gemäß Ansprüchen 1, 2 oder 3, worin die geprägten Strukturen (14) gepunktete Linien sind.

7. Schnittfreie Magnetbandstruktur gemäß Ansprüchen 1, 2 oder 3, worin die geprägten Strukturen (14) linear angeordnete Öffnungen sind.

8. Schnittfreie Magnetbandstruktur gemäß Ansprüchen 1, 2 oder 3, worin die geprägten Strukturen (14) von einander durch vorbestimmte Längen räumlich getrennt sind.

9. Schnittfreie Magnetbandstruktur gemäß Anspruch 8, worin die vorbestimmten Längen zwischen den geprägten Strukturen (14) gemäß dem Einheitsintervall der magnetischen Pole eingestellt werden.

10. Schnittfreie Magnetbandstruktur gemäß Anspruch 8, worin die vorbestimmten Längen zwischen den geprägten Strukturen (14) ungleich sind.

11. Schnittfreie Magnetbandstruktur gemäß Ansprüchen 1, 2 oder 3, worin die geprägten Strukturen (14) unregelmäßige Formen haben.

12. Schnittfreie Magnetbandstruktur gemäß Ansprüchen 1, 2 oder 3, worin die gesprühte Ummantelung oder gemalte Ummantelung (121) mit einer Farbe versetzt ist.

## Revendications

1. Structure de bande magnétique découpable comprenant un substrat magnétique souple de type ruban allongé (11), le substrat présentant une face qui peut être dégagée (12) et une face adhésive, un revêtement pulvérisé ou peint (121) étant pulvérisé ou peint sur la face qui peut être dégagée (12), une couche adhésive (13) étant déposée sur la face adhésive, l'une au moins des deux faces du substrat étant gaufrée avec des textures gaufrées (14) disposées de manière continue, le substrat (11) étant enroulé en un rouleau, **caractérisée en outre en ce que** lesdites textures gaufrées (14) sont déposées sur le substrat (11) à intervalles égaux de façon à former une structure en dent de scie et dans laquelle chaque texture gaufrée (14) présente une section crête (141) et une section vallée (142) adjacente à la section crête (141).

2. Structure de bande magnétique découpable selon la revendication 1, dans laquelle la face qui peut être dégagée (12) du substrat (11) est gaufrée avec des textures gaufrées (14) disposées dans la même direction.

3. Structure de bande magnétique découpable selon la revendication 1, dans laquelle la face qui peut être dégagée (12) du substrat (11) est gaufrée avec des textures gaufrées (14) disposées dans des directions différentes.

4. Structure de bande magnétique découpable selon l'une quelconque des revendications 1 à 3, dans laquelle les textures gaufrées (14) sont des rainures qui présentent une profondeur définie.

5. Structure de bande magnétique découpable selon l'une quelconque des revendications 1 à 3, dans laquelle les textures gaufrées (14) sont des rainures linéaires.

6. Structure de bande magnétique découpable selon l'une quelconque des revendications 1 à 3, dans laquelle les textures gaufrées (14) sont des lignes en pointillés.

7. Structure de bande magnétique découpable selon l'une quelconque des revendications 1 à 3, dans laquelle les textures gaufrées (14) sont des orifices disposés de manière linéaire.

8. Structure de bande magnétique découpable selon l'une quelconque des revendications 1 à 3, dans laquelle les textures gaufrées (14) sont espacées les unes des autres par des longueurs prédéterminées.

9. Structure de bande magnétique découpable selon la revendication 8, dans laquelle les longueurs prédéterminées entre les textures gaufrées (14) sont fixées selon un intervalle unitaire de pôles magnétiques.

10. Structure de bande magnétique découpable selon la revendication 8, dans laquelle les longueurs prédéterminées entre les textures gaufrées (14) sont inégales.

11. Structure de bande magnétique découpable selon l'une quelconque des revendications 1 à 3, dans laquelle les textures gaufrées (14) présentent des formes irrégulières.

12. Structure de bande magnétique découpable selon l'une quelconque des revendications 1 à 3, dans laquelle le revêtement pulvérisé ou le revêtement peint (121) est dopé avec une couleur.
